# EUROPÄISCHE PATENTANMELDUNG

(11) **EP 2 366 915 A2**
(43) Veröffentlichungstag der Anmeldung: **21.09.2011**
(21) Anmeldenummer: 11154330.2
(22) Anmeldetag: 14.02.2011
(51) Int. Cl.: F16F 9/48, F16F 9/512

(54) **Schwingungsdämpfer mit hubabhängiger Dämpfkraft**

(30) Priorität: 17.03.2010 DE 102010002937
(71) Anmelder: ZF Friedrichshafen AG, 88038 Friedrichshafen (DE)
(72) Erfinder: Heyn, Steffen, 97464, Niederwerrn (DE); Zeissner, Bernd, 97332, Volkach (DE)

(57) **Zusammenfassung**

Schwingungsdämpfer mit hubabhängiger Dämpfkraft, umfassend einen Zylinder in dem eine Kolbenstange mit einem Kolben axial beweglich geführt ist, wobei der Kolben den Zylinder in zwei mit Dämpfmedium gefüllte Arbeitsräume unterteilt und zwischen den beiden Arbeitsräumen ein Bypass besteht, der in Abhängigkeit der Kolbenposition im Zylinder zu- oder abgeschaltet wird, wobei der Kolben für mindestens eine Durchströmungsrichtung ein Dämpfventil aufweist, das von mindestens einem Ventilkörper gebildet wird, der einen Durchströmungskanal im Dämpfventil zumindest teilweise abdeckt, wobei der mindestens eine Ventilkörper eine erste und eine zweite druckbeaufschlagte Fläche aufweist, wobei die Wirkung der zweiten druckbeauschlagten Fläche von der Position des Kolbens zum Bypass abhängt. Die beiden druckbeschlagten Flächen sind an gegenüberliegenden Deckseiten des mindestens einen Ventilkörpers ausgeführt, wobei die erste druckbeaufschlagte Fläche eine Abhubkraft und die zweite druckbeauschlagte Fläche eine Schließkraft auf die Ventilscheibe ausüben, wobei die erste druckbeaufschlagte Fläche größer ist als die zweite druckbeaufschlagte Fläche, die an einen ebenfalls mit Dämpfmedium gefüllten Steuerraum und einen Verbindungskanal angeschlossen ist, der in Abhängigkeit der Hublage des Kolbens in Überdeckung mit dem Bypass steht.

## Beschreibung

Die Erfindung betrifft einen Schwingungsdämpfer mit hubabhängiger Dämpfkraft gemäß dem Oberbegriff von Patentanspruch 1.

Bei einem konventionellen Schwingungsdämpfer besteht das generelle Problem der Bandbreite zwischen der kleinsten weichsten und der größten härtesten Dämpfkraft. Insbesondere bei einem nur gering beladenen Fahrzeug ist die Dämpfkraft häufig zu groß, da auch ein beladenes Fahrzeug noch sicher beherrschbar sein muss. Um diesen Widerspruch auflösen zu können, ist es bereits seit langem bekannt, Schwingungsdämpfer mit Längsnuten im Arbeitszylinder zu verwenden. Bei geringfügiger Beladung kann das Dämpfmedium über einen Bypass einen Kolben an einer Kolbenstange umströmen und damit eine Absenkung der Dämpfkraft bewirken. Das erreichbare Ergebnis kann jedoch noch nicht in jedem Fall vollständig überzeugen.

In der DE 103 43 875 A1 ist offenbart, dass über die Bypassnut im Arbeitszylinder durch eine Zuschaltung einer zusätzlichen druckbeaufschlagten Fläche an einem Dämpfventil eine deutlich größere Bandbreite der Dämpfkraft erreicht werden kann. Die Bypassnut dient der Dämpfmittelzufuhr zur druckbeauschlagten Fläche an einer Ventilscheibe. Außerhalb der Bypassnut ist der Zustrom blockiert, so dass nur eine ständig anströmbare Fläche an der Ventilscheibe zur Verfügung steht und damit die Dämpfkraft bestimmt wird. Diese Dämpfventilbauweise ermöglicht prinzipiell drei Dämpfkraftstufen. Befindet sich der Kolbenring 11 außerhalb der Bypassnut 49, dann wirkt der Schwingungsdämpfer mit der größten Dämpfkrafteinstellung. Bewegt sich der Kolbenring 11 innerhalb der, jedoch die Dichtung 45 außerhalb der Bypassnut, dann steht über den Zustrom zur weiteren druckbeaufschlagten Fläche an der Ventilscheibe eine weichere Dämpfkrafteinstellung zur Verfügung. Die weichste Dämpfkrafteinstellung wird erreicht, wenn sich sowohl der Kolbenring 11 wie auch die Dichtung 45 innerhalb der Bypassnut 49 befinden.

Die Aufgabe der vorliegenden Erfindung besteht darin, einen Schwingungsdämpfer mit hubabhängiger Dämpfkraft zu realisieren, der eine möglichst große Spreizung der Dämpfkräfte aufweist.

Erfindungsgemäß wird die Aufgabe dadurch gelöst, dass die beiden druckbeschlagten Flächen an gegenüberliegenden Deckseiten des mindestens einen Ventilkörpers ausgeführt sind, wobei die erste druckbeaufschlagte Fläche eine Abhubkraft und die zweite druckbeauschlagte Fläche eine Schließkraft auf die Ventilscheibe ausüben, wobei die erste druckbeaufschlagte Fläche größer ist als die zweite druckbeaufschlagte Fläche, die an einen ebenfalls mit Dämpfmedium gefüllten Steuerraum und einen Verbindungskanal angeschlossen ist, der in Abhängigkeit der Hublage des Kolbens in Überdeckung mit dem Bypass steht.

Die zweite druckbeaufschlagte Fläche und damit die hydraulische Schließkraft auf den Ventilkörper wird in Abhängigkeit des Abflusses von Dämpfmedium aus dem Steuerraum wirksam. Der große Vorteil im Vergleich zum aufgezeigten Stand der Technik besteht darin, dass der radiale Bauraumbedarf deutlich geringer ist, da die zweite druckbeaufschlagte Fläche und die erste druckbeaufschlagte Fläche gegenüberliegenden Deckseiten angeordnet sind. Die Schließkraft der zweiten druckbeaufschlagten Fläche wird vom Abfluss des Dämpfmediums aus dem Steuerraum bestimmt.

Im Hinblick auf einen einfachen Dämpfventilaufbau weist der Ventilkörper eine Zustromöffnung zum Steuerraum auf.

Gemäß einem weiteren vorteilhaften Unteranspruch ist der Kolben zweiteilig ausgeführt, wobei ein Kolbenteil einen topfförmigen Querschnitt aufweist und eine Aufnahme für den Ventilkörper bildet.

Des Weiteren ist vorgesehen, dass sich der Verbindungskanal radial bis zur Mantelfläche des Kolbens erstreckt und in eine axiale offene Nut mündet. Die axiale Länge der Nut in der Mantelfläche kann als Einstellparameter für die Gesamtdämpfkraftkennlinie des Dämpfventils genutzt werden.

Um den Herstellungsaufwand zu optimieren, wird die axiale offene Nut von einer Durchmesserreduzierung des Kolbens gebildet.

Der Ventilkörper weist einen Anschlag auf, der die maximale Abhubposition des Ventilkörpers bestimmt.

Des Weiteren werden in einem Kolbenteil gemeinsame Durchströmungskanäle für beide Durchströmungsrichtungen verwendet. Es können einfache Axialkanäle ausgeführt sein, die sich leicht herstellen lassen und große Durchströmungsquerschnitte bilden.

In diesem Zusammenhang ist vorteilhafterweise in einem Kolbenteil eine Ringnut ausgeführt, die über die Stellung des Ventilkörpers an Durchströmungskanäle für beide Durchströmungsrichtungen anschließbar ist.

Anhand der folgenden Figurenbeschreibung soll die Erfindung näher erläutert werden.

Es zeigt:
- Fig.1a und 1b: Schwingungsdämpfer mit hubabhängigem Dämpfventil mit großer Dämpfkraft
- Fig. 2a und 2b: Dämpfventil nach Fig. 1a, b in Hublage mit minimaler Dämpfkraft

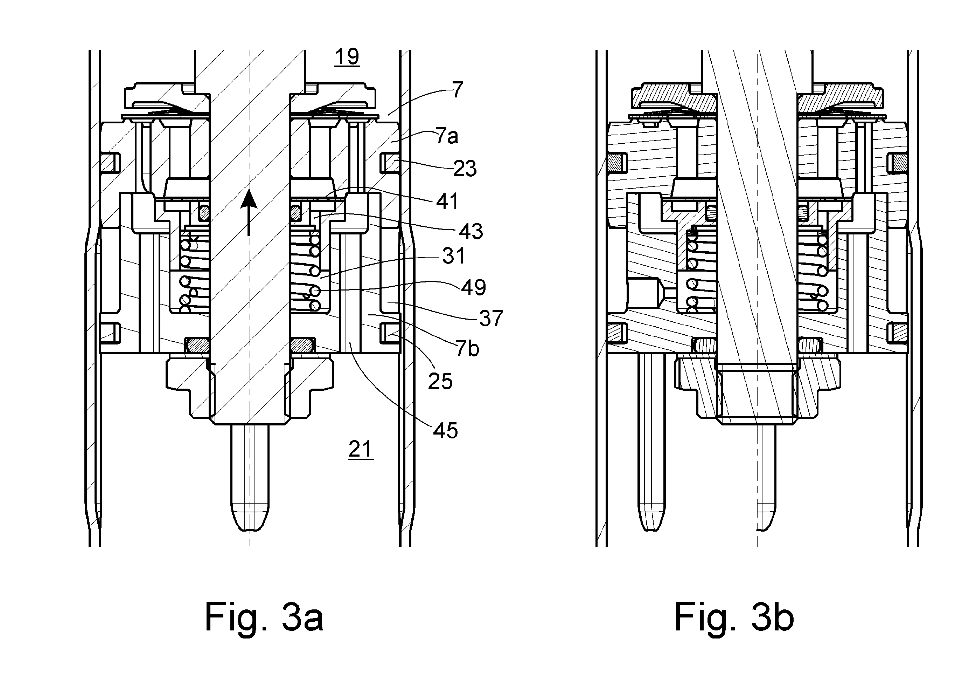

- Fig. 3a und 3b: Dämpfventil nach Fig. 1a; b in Hublage mit reduzierter Dämpfkraft

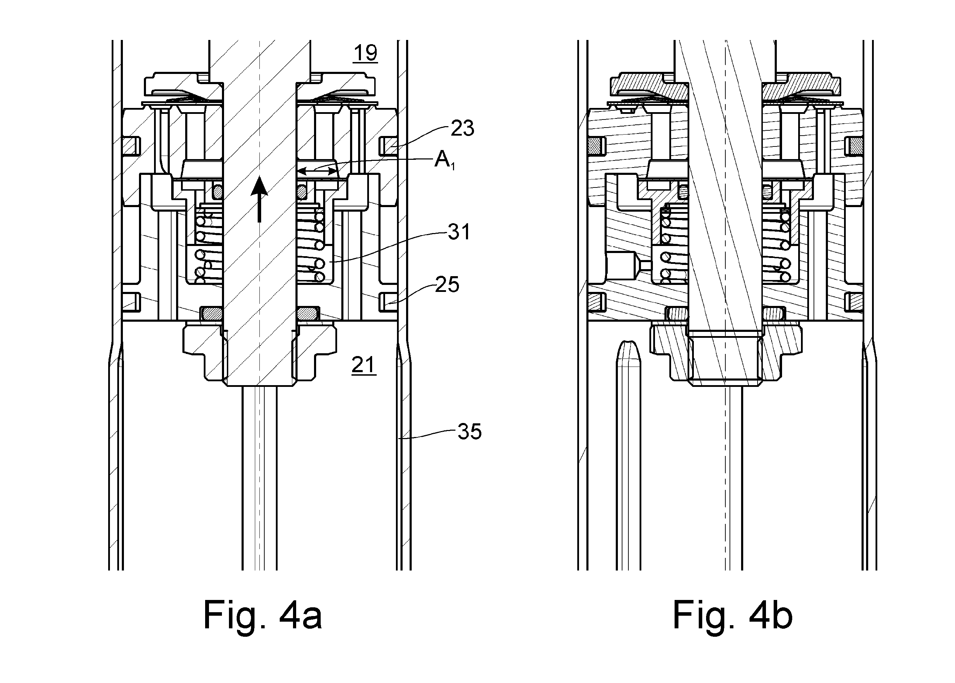

- Fig. 4a und 4b: Dämpfventil nach Fig. 1a; b außerhalb des Bypasses

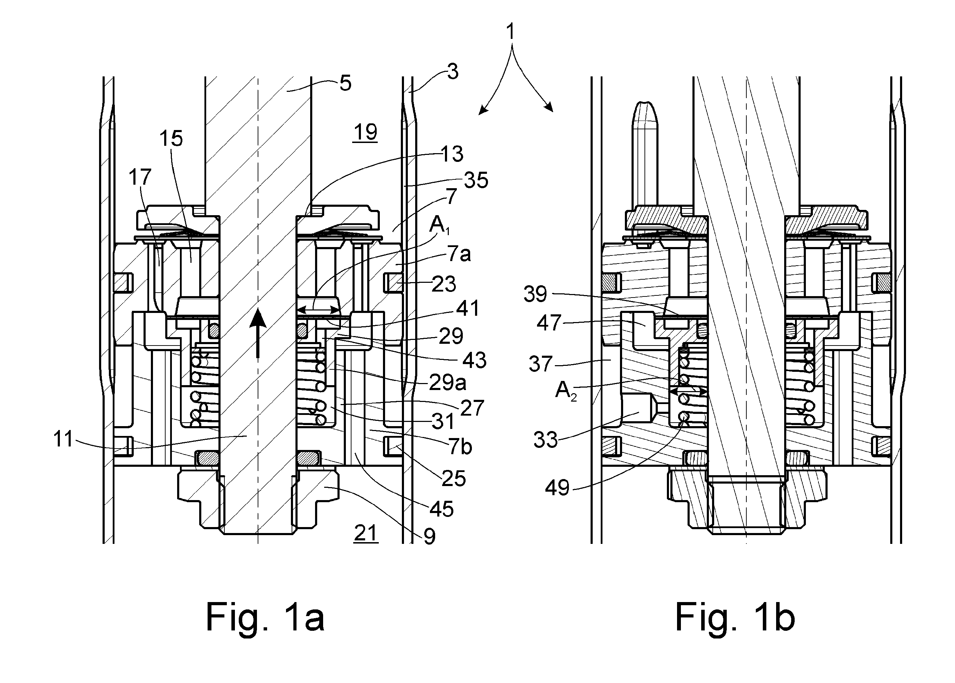

Die Figuren 1a; 1b zeigt einen Ausschnitt aus einem Schwingungsdämpfer 1 in zwei verschiedenen Schnittebenen. In einem Zylinder 3 ist eine Kolbenstange 5 mit einem Kolben 7 axial beweglich geführt. Dabei spielt es für die Funktion der Erfindung keine Rolle, ob es sich dabei um einen Einrohr- oder Zweirohrschwingungsdämpfer handelt.

Der Kolben 7 ist zweiteilig ausgeführt, wobei beide Kolbenteile 7a, 7b über eine Befestigungsmutter 9 auf einem Kolbenstangenzapfen 11 an einem Absatz 13 der Kolbenstange 5 fixiert sind. Ein erstes Kolbenteil 7a verfügt über getrennte Durchströmungskanäle 15; 17 für zwei entgegengesetzte Strömungsrichtungen des Dämpfmediums im Kolben, der den Zylinder 3 in einen kolbenstangenseitigen und einen kolbenstangenfernen Arbeitsraum 19; 21 unterteilt. Beide Arbeitsräume 19; 21 sind vollständig mit Dämpfmedium gefüllt und werden von zwei beabstandeten Kolbenringen 23; 25, jeweils ein Kolbenring in einem Kolbenteil, getrennt.

Ein zweites Kolbenteil 7b weist einen topfförmigen Querschnitt auf, der eine Aufnahme 27 für einen axial beweglichen Ventilkörper 29 bildet. Der Ventilkörper 29 verfügt über eine gestufte Außenkontur, wobei der Längenabschnitt 29a mit dem kleineren Außendurchmesser in der Aufnahme 27 abgedichtet geführt ist. Eine Unterseite des Ventilkörpers 29 und die Aufnahme 27 des zweiten Kolbenteils 7b bilden einen ebenfalls mit Dämpfmedium gefüllten Steuerraum 31. Dieser Steuerraum 31 ist über einen Verbindungskanal 33 an einen Bypass 35 in der Bauform mindestens einer Axialnut in der innenwandung des Zylinders 3 angeschlossen. Der Verbindungskanal 33 im Kolben 7 erstreckt sich radial bis zur Mantelfläche des Kolbens und mündet in einer offenen Nut 37, die zum Beispiel von einer Durchmesserreduzierung des Kolbens 7 gebildet wird, in diesem Fall von einem radialen Absatz des zweiten Kolbenteils 7b.

Der Ventilkörper 29 deckt zumindest teilweise eine Austrittsöffnung des mindestens einen Durchtrittskanals 15 im ersten Kolbenteil 7a ab. Die dem ersten Kolbenteil 7a zugewandte Oberseite des Ventilkörpers 29 bildet eine erste in Öffnungsrichtung wirksame druckbeaufschlagte Fläche A1, die aufgrund der gestuften Bauform des Ventilkörpers 29 größer ist als eine in Schließrichtung wirksame zweite Fläche A2 an einer Unterseite des Ventilkörpers 29, die vom Druck im Steuerraum 31 beaufschlagt wird. In einer Ventilscheibe 39 und im Ventilkörper 29 selbst ist mindestens eine jeweils eine Zuströmöffnung 41; 43 von dem mindestens einen Durchtrittskanal 15 zum Steuerraum 31 ausgeführt.

In dem zweiten Kolbenteil 7b sind gemeinsame Durchströmungskanäle 45 für beide Durchströmungsrichtungen ausgeführt. An einer in Richtung des ersten Kolbenteils 7a weisenden Stirnfläche des zweiten Kolbenteils 7b ist eine Ringnut 47 ausgeführt, die über die Stellung des Ventilkörpers 29 an die Durchströmungskanäle 15 im ersten Kolbenteil 7a anschließbar sind.

Die Figurengruppe 1a; 1 b zeigt den Kolben 7 in einer Position zum Bypass 35, bei der der Kolbenring 23 im ersten Kolbenteil 7a in axialer Überdeckung mit dem Bypass 35 steht, so dass der Kolbenring 23 bei einer Kolbenstangenbewegung in Pfeilrichtung wirkungslos ist. Der Kolbenring 25 im zweiten Kolbenteil 7b übt seine Dichtfunktion voll aus Über die axiale Nut 37 in der Mantelfläche des Kolbens und dem Verbindungskanal 33 herrscht im Steuerraum 31 ein Momentandruck vergleichbar dem Druck im kolbenstangenseitigen Arbeitsraum 19. Zusätzlich setzt sich der Druck des Dämpfmediums über die Durchtrittskanäle 15 und den Zuströmöffnungen 41; 43 in der Ventilscheibe 39 und dem Ventilkörper 29 in den Steuerraum 31 fort. Folglich sind der Druck in Abhubrichtung auf den und der Druck in Schließrichtung des Ventilkörper zwar zumindest annähernd gleich groß, jedoch ist die auf der ersten druckbeaufschlagten Fläche A1 an der Oberseite des Ventilkörpers 29 wirksame Öffnungskraft aufgrund des größeren Querschnitts höher als die wirksame Schließkraft an der Unterseite des Ventilkörpers, so dass der Ventilkörper 29 vom ersten Kolbenteil 7a abhebt und den Strömungsweg zu den Durchströmungskanälen 45 freigibt. Die gestufte Bauform des Ventilkörpers 29 ist als Anschlag für die maximale Abhubposition des Ventilkörpers nutzbar.

Die Dämpfkrafteinstellung des Dämpfventils ist vergleichbar mit einer Kolbenposition vollständig außerhalb des Bypasses.

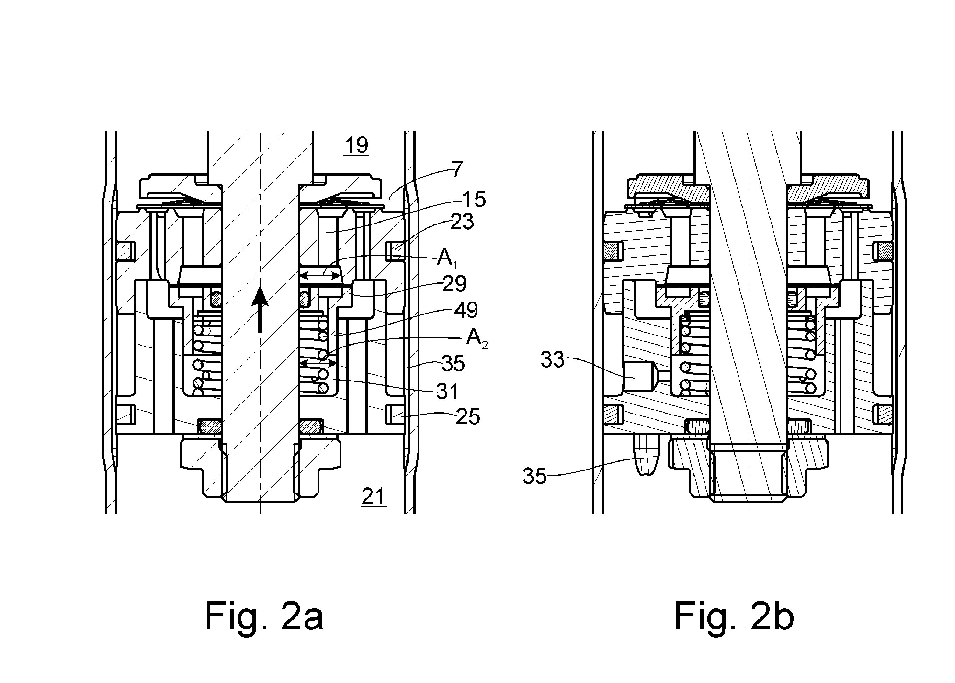

Die Figuren 2a; 2b zeigen den Kolben 7 in einer Hublage, in der sich beide Kolbenringe 23; 25 innerhalb der axialen Erstreckung des Bypasses 35 befinden und folglich keine vollständige Dichtfunktion ausüben können. Bei einer Kolbenstangenbewegung in Pfeilrichtung kann ein Teil des aus dem kolbenstangenseitigen Arbeitsraum 19 verdrängten Dämpfmediums über den Bypass 35 in den kolbenstangenfernen Arbeitsraum 21 abfließen. Ein Anteil des Dämpfmediums fließt über die inneren Durchströmungskanäle 15 in Richtung der ersten druckbeaufschlagten Fläche A1 am Ventilkörper 29 und weiter, wie bereits zur Figurengruppe 1a, 1b beschrieben, in den Steuerraum 31, der nun über den Verbindungskanal 33 ebenfalls an den Bypass 35 angeschlossen ist, so dass der Druck im Steuerraum 31 und damit an der zweiten druckbeaufschlagten Fläche A2 deutlich geringer ist als an der ersten druckbeaufschlagten Fläche A1. Folglich ist bei einer vergleichbaren Kolbenbewegung gegen die Kraft einer Ventilfeder 49 eine kleinere Abhubkraft für den Ventilkörper 29 notwendig, d. h. die Dämpfkraft sinkt ab im Vergleich zur Kolbenposition nach der Figurengruppe 1a; 1 b.

Die Figurengruppe 3a; 3b zeigt den Kolben 7 in einer Hublage, bei der sich der Kolbenring 23 im ersten Kolbenteil 7a axial außerhalb und der Kolbenring 25 im zweiten Kolbenteil 7b innerhalb des Bereichs des Bypasses 35 befinden. Es liegt nun im Vergleich zur Figurengruppe 2a; 2b eine nochmals geringere Dämpfkraft an, da abgesehen von einem Steuervolumenstrom zwischen der Oberseite und der Unterseite des Ventilkörpers 29 über die Zuströmöffnungen 41; 43 das gesamte Dämpfmedium an dem abgehobenen Ventilkörper 29 fließen muss. Im Vergleich zur Figurengruppe 2a; 2b strömt aber auch ein größerer Volumenstrom durch die Zuströmöffnungen 41; 43, d. h. das Druckgefälle an dem Ventilkörper 29 steigt. Dieses gesteigerte Druckgefälle bedingt die weichste Dämpfkrafteinstellung. Die gesamten Durchtrittskanäle 45 im zweiten Kolbenteil 7b stehen zur Abströmung zur Verfügung. Der Druck im Steuerraum 31 ist durch das Druckgefälle zwischen den beiden Arbeitsräumen 19; 21 in etwa auf dem Niveau wie bei der Figurengruppe 2a, 2b, da der Abfluss des Dämpfmediums aus dem Steuerraum 31 über den Verbindungskanal 33 und der Nut 37 in der Mantelfläche des Kolbens 7 zum Bypass 35 gewährleistet ist.

In der Figurengruppe 4a, 4b befinden sich alle Kolbenringe 21; 23 außerhalb des Bypasses 35 und können deshalb nicht hinterströmt werden. Folglich ist auch kein Abfluss von Dämpfmedium aus dem Steuerraum 31 in den kolbenstangenfernen Arbeitsraum 21 möglich. Damit herrscht im Steuerraum 31 ein vergleichbarer Druck wie an der Oberseite bzw. der ersten druckbeaufschlagten Fläche A1 des Ventilkörpers 29, so dass die größte Dämpfkrafteinstellung des Dämpfventils vorliegt.

Mit dem Steuerraum 31 in Verbindung mit dem Druckgefälle zwischen der ersten und zweiten druckbeaufschlagten Fläche A1; A2 kann neben der Schließkraft der Ventilfeder 49 eine hydraulische Dämpfkraftkomponente genutzt werden, die deutlich größer sein kann als die mechanische Kraft der Ventilfeder 49. Deshalb kann diese Ventilfeder im Vergleich zu einer Ventilfeder in einem Dämpfventil mit nur einer druckbeaufschlagten Fläche eine signifikant kleinere Kraft aufweisen. Diese Kraftreduzierung minimiert Herstellungstoleranzen, die sich wiederum auf die Dämpfkrafttoleranzen des gesamten Dämpfventils auswirken.

### Bezugszeichenliste

- 1: Schwingungsdämpfer
- 3: Zylinder
- 5: Kolbenstange
- 7: Kolben
- 7a; 7b: Kolbenteile
- 9: Befestigungsmutter
- 11: Kolbenstangenzapfen
- 13: Absatz
- 15, 17: Durchströmungskanäle im ersten Kolbenteil
- 19: kolbenstangenseitigen Arbeitsraum
- 21: kolbenstangenferner Arbeitsraum
- 23, 25: Kolbenring
- 27: Aufnahme
- 29: Ventilkörper
- 29a: Längenabschnitt am Ventilkörper
- 31: Steuerraum
- 33: Verbindungskanal
- 35: Bypass
- 37: Nut
- 39: Ventilscheibe
- 41; 43: Zuströmöffnung
- 45: Durchströmungskanäle im zweiten Kolbenteil
- 47: Ringnut
- 49: Ventilfeder

## Patentansprüche

1. Schwingungsdämpfer (1) mit hubabhängiger Dämpfkraft, umfassend einen Zylinder (3) in dem eine Kolbenstange (5) mit einem Kolben (7) axial beweglich geführt ist, wobei der Kolben (7) den Zylinder (3) in zwei mit Dämpfmedium gefüllte Arbeitsräume (19; 21) unterteilt und zwischen den beiden Arbeitsräumen (19; 21) ein Bypass (35) besteht, der in Abhängigkeit der Kolbenposition im Zylinder zu- oder abgeschaltet wird, wobei der Kolben (7) für mindestens eine Durchströmungsrichtung ein Dämpfventil aufweist, das von mindestens einem Ventilkörper (29) gebildet wird, der einen Durchströmungskanal (15) im Dämpfventil zumindest teilweise abdeckt, wobei der mindestens eine Ventilkörper (15) eine erste und eine zweite druckbeaufschlagte Fläche (A1; A2) aufweist, wobei die Wirkung der zweiten druckbeauschlagten Fläche von der Position des Kolbens (7) zum Bypass (35) abhängt,
**dadurch gekennzeichnet,**
**dass** die beiden druckbeschlagten Flächen (A1; A2) an gegenüberliegenden Deckseiten des mindestens einen Ventilkörpers (29) ausgeführt sind, wobei die erste druckbeaufschlagte Fläche (A1) eine Abhubkraft und die zweite druckbeauschlagte Fläche (A2) eine Schließkraft auf die Ventilscheibe ausüben, wobei die erste druckbeaufschlagte Fläche (A1) größer ist als die zweite druckbeaufschlagte Fläche (A2), die an einen ebenfalls mit Dämpfmedium gefügten Steuerraum (31) und einen Verbindungskanal (33) angeschlossen ist, der in Abhängigkeit der Hublage des Kolbens (7) in Überdeckung mit dem Bypass (35) steht.

2. Schwingungsdämpfer nach Anspruch 1;
**dadurch gekennzeichnet,**
**dass** der Ventilkörper (29) eine Zustromöffnung (43) zum Steuerraum (31) aufweist.

3. Schwingungsdämpfer nach Anspruch 1,
**dadurch gekennzeichnet,**
**dass** der Kolben (7) zweiteilig ausgeführt ist, wobei ein Kolbenteil (7b) einen topfförmigen Querschnitt aufweist und eine Aufnahme (27) für den Ventilkörper (29) bildet.

4. Schwingungsdämpfer nach Anspruch 1,
**dadurch gekennzeichnet,**
**dass** sich der Verbindungskanal (33) radial bis zur Mantelfläche des Kolbens (7) erstreckt und in eine axiale offene Nut (37) mündet.

5. Schwingungsdämpfer nach Anspruch 4,
**dadurch gekennzeichnet,**
**dass** die axiale offene Nut (37) von einer Durchmesserreduzierung des Kolbens (7) gebildet wird.

6. Schwingungsdämpfer nach Anspruch 1,
**dadurch gekennzeichnet,**
**dass** der Ventilkörper (29) einen Anschlag aufweist, der die maximale Abhubposition des Ventilkörpers (29) bestimmt.

7. Schwingungsdämpfer nach Anspruch 3,
**dadurch gekennzeichnet,**
**dass** in einem Kolbenteil (7b) die gemeinsame Durchströmungskanäle (45) für beide Durchströmungsrichtungen verwendet werden.

8. Schwingungsdämpfer nach Anspruch 7,
**dadurch gekennzeichnet,**
**dass** in einem Kolbenteil (7b) eine Ringnut (47) ausgeführt ist, die über die Stellung des Ventilkörpers (29) an die Durchströmungskanäle (45) für beide Durchströmungsrichtungen anschließbar ist.
